# EUROPÄISCHE PATENTSCHRIFT

(11) **EP 2 582 582 B1**
(45) Veröffentlichungstag und Bekanntmachung des Hinweises auf die Patenterteilung: **14.05.2014**
(21) Anmeldenummer: 11758094.4
(22) Anmeldetag: 16.06.2011
(51) Int. Cl.: B64D 45/00

(54) **ABWERFVORRICHTUNG FÜR EINEN FLUGDATENSCHREIBER**
EJECTOR DEVICE FOR FLIGHT DATA RECORDER
DISPOSITIF D'ÉJECTION D'UN ENREGISTREUR DE VOL

(30) Priorität: 19.06.2010 DE 102010024400
(43) Veröffentlichungstag der Anmeldung: 24.04.2013
(73) Patentinhaber: EADS Deutschland GmbH, 85521 Ottobrunn (DE)
(72) Erfinder: GREWE, Reinhold, 88690 Uhldingen-Mühlhofen (DE); FEIERABEND, Stefan, 88048 Friedrichshafen (DE)
(74) Vertreter: Meel, Thomas
(86) Internationale Anmeldenummer: PCT/DE2011/001361
(87) Internationale Veröffentlichungsnummer: WO 2011/157265

(56) Entgegenhaltungen:
- BE-A- 635 772
- DE-A1- 1 481 960
- DE-C2- 19 609 501
- DE-C2- 19 848 801
- GB-A- 1 318 197
- US-A- 3 140 847

## Beschreibung

Die Erfindung betrifft eine Abwerfvorrichtung zum Trennen eines abwerfbaren Flugdatenschreibers, z.B. von einer Flugzeugzelle.

In den herkömmlichen abwerfbaren Flugdatenschreibern werden explosive Kartuschen, Sprengschrauben oder Squibs verwendet, um die Verbindung zwischen dem abwerfbarem Teil und der Abwerfvorrichtung des Flugdatenschreiber-Systems zu trennen. Diese Methode ist extrem betriebssicher und zuverlässig, weil nur sehr wenige elektrische, mechanische und chemische Komponenten an der Funktionalität beteiligt sind.

Der Umgang mit den dazu benötigten explosiven Stoffen wurde in den letzten 10 Jahren mit hohen Auflagen bei Versand, Lagerung und Einbau belastet. Dies führt zu hohen Kosten für den Einsatz bzw. Austauch der betreffenden Komponenten und zu einer sich verringernden Bereitschaft der Flugzeugerzeuger oder Flugzeugbetreiber, solche Teile in oder an einem Flugzeug zu integrieren.

Die GB 1 318 197 A, die als nächstliegender Stand der Technik angesehen wird, beschreibt eine Abwerfvorrichtung für einen Flugdatenschreiber mit einer Ausrückvorrichtung mit einem druckfesten Gehäuse und einem Druckgasgenerator, bei der der Flugdatenschreiber mittels eines Gasdruckgenerators ausgeworfen wird. Der Gasdruckgenerator beaufschlagt dabei eine Druckkammer, deren Innendruck wiederum unmittelbar auf das Gehäuse des Flugdatenschreibers wirkt. Eine weitere gasdruckbetriebene Abwerfeinrichtung ist in der DE 198 48 801 C2 offenbart.

Die DE 196 09 501 C2 verwendet zum Abwerfen des Flugdatenschreibers eine Katapulteinrichtung mit Sprengsatz, während in der US 3 140 847 A zu diesem Zweck eine Rakete vorgeschlagen wird.

Der Erfindung liegt die Aufgabe zugrunde, eine gattungsgemäße Vorrichtung zu schaffen, die bei Versand, Lagerung und Einbau keine Anforderung an speziell ausgebildetes Personal für den Umgang mit explosiv Stoffen stellt:
- Keine oder nur geringe Einschränkungen beim Versand der Teile;
- Die Teile sollen in großer Stückzahl ungeschützt in einer Kiste ohne besondere "Trennvorschriften" durch reguläre Postdienste (z.B. UPS) transportierbar sein;
- Die Teile sollen in einem Lager ohne spezielle Sicherheitsanforderungen deponierbar sein;
- Der Einbau der Teile in die Abwurfvorrichtung soll durch Servicepersonal möglich sein, das keine spezielle Zulassung zum Umgang mit Explosivstoffen benötigt.

Diese Aufgabe wird mit der Vorrichtung nach Anspruch 1 gelöst. Vorteilhafte Ausführungen sind Gegenstand von Unteransprüchen.

Die erfindungsgemäße Vorrichtung erfüllt sämtliche vorstehend beschriebene Anforderungen, weil
- keinerlei explosive Stoffe verwendet werden,
- alle Auswirkungen einer unbeabsichtigten Auslösung ohne schädliche Auswirkung (wie zum Beispiel hervorschnellende mechanische Bolzen/Schrauben oder Hitzeeinwirkungen) auf außerhalb der Vorrichtung sich befindlichen Menschen oder Gegenständen bleibt.
- die zum Trennen eines abwerfbaren Flugdatenschreibers benötigte Energie wird im Fehlerfall innerhalb der Vorrichtung aufgefangen und vernichtet bzw. unschädlich abgeleitet.

Darüber hinaus ist die erfindungsgemäße Vorrichtung derart ausgebildet, dass auch schwere mechanische Einwirkungen durch Unfall oder unsachgemäßen Gebrauch nicht zu einer funktionellen Beeinträchtigung bzw.Beschädigung der Auswurfvorrichtung führen können.

Die erfindungsgemäße Vorrichtung ist preiswert herstellbar und weicht im Verkaufspreis nicht wesentlich von einer herkömmlichen explosiven Kartusche ab.

Die Erfindung wird anhand von Fig. näher erläutert. Es zeigen:
- Fig. 1: eine erfindungsgemäße Abwerfvorrichtung mit montierter Auswurfspindel und gelöstem Bajonettverschluss in 3D-Darstellung,
- Fig. 2: eine erfindungsgemäße Abwerfvorrichtung mit montierter Auswurfspindel und geschlossenem Bajonettverschluss in Querschnittsdarstellung;
- Fig. 3: eine erfindungsgemäße Abwerfvorrichtung mit montierter Auswurfspindel und gelösten Bajonettverschluss in Querschnittsdarstellung,
- Fig. 4: die Ausrückvorrichtung der erfindungsgemäßen Abwerfvorrichtung bei nicht montierter Auswurfspindel in Querschnittsdarstellung.

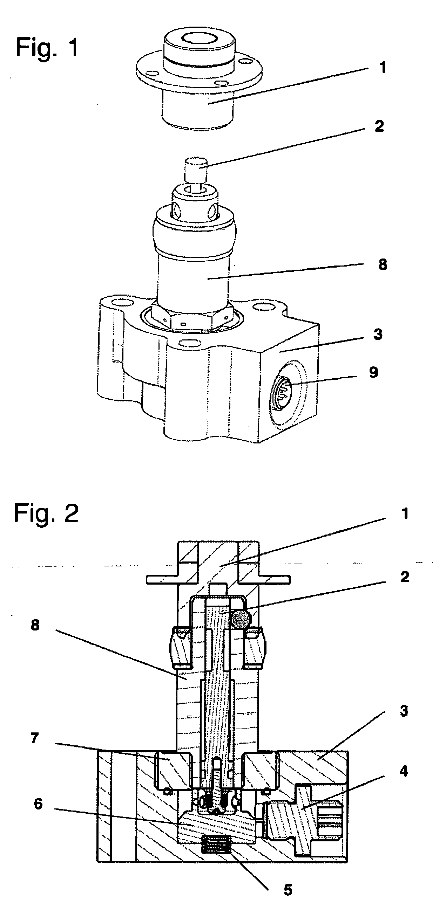

### Grundsätzliche Struktur der Abwerfvorrichtung (Fig. 1)

Die erfindungsgemäße Abwerfvorrichtung, wie sie in Fig. 1 beispielhaft dargestellt, umfasst eine Ausrückvorrichtung 3, bevorzugt aus einem konturgefrästen, druckfesten Aluminium-Gehäuse, in welches eine Auswurfspindel 8 eingeschraubt werden kann, Die Auswurfspindel 8 stellt über einen Bajonettverschluss 1 die Verbindung zu dem abwerfbaren Flugdatenschreiber (nicht dargestellt) her. Durch Lösen des Bajonettverschlusses 1 mittels der Auswurfspindel 8 wird der abwerfbare Flugdatenschreiber abgetrennt. Die Trennung wird durch einen elektrischen Impuls auf den in der Ausrückvorrichtung 3 integrierten Gasdruckgenerator 4 (siehe Fig. 2) eingeleitet.

### Einbau der Auswurfspindel in die Ausrückvorrichtung (Fig. 2)

Die Auswurfspindel 8 wird mit ihrem Gewinde in den in der Ausrückvorrichtung 3 eingearbeiteten Gewindeeinsatz 7 geschraubt. Dabei wird das in der Ausrückvorrichtung durch eine Feder 5 vorgespannte Ventil 6 in Richtung auf seine in Fig. 2 dargestellte Betriebsposition verschoben. Die Auswurfspindel 8 wird bis zum Anschlag in die Ausrückvorrichtung 3 eingeschraubt. Das Ventil 6 erreicht dadurch seine Betriebsposition. In der Betriebsposition kann im Abwurffall der von dem Gasdruckgenerator 4 erzeugte Gasdruck zur Auswurfspindel 8 gelangen.

### Montage des abwerfbaren Flugdatenschreibers (Fig. 2)

Der abwerfbare Flugdatenschreiber wird mit Hilfe des Bajonettverschlusses 1 auf die Auswurfspindel 8 aufgesetzt.

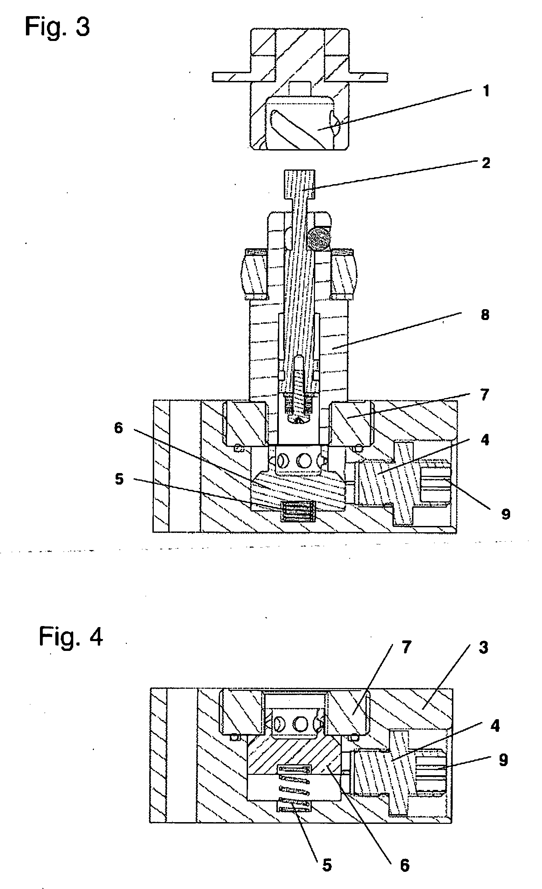

### Auslösung der Abwerfvorrichtung (Fig. 3)

Mit vollständig eingeschraubter Auswurfspindel 8 in die Ausrückvorrichtung 3 und der dadurch bewirkten Betriebsposition des Ventils 6 ist eine druckfeste Fließverbindung zwischen dem Gasdruckgenerator 4 und der Auswurfspindel 8 hergestellt. Im Abwurffall wird ein elektrischer Impuls über den Stecker 9 auf den Gasdruckgenerator 4 geleitet und der von dem Gasdruckgenerator daraufhin erzeugte Gasdruck gelangt über das Ventil 6 zur Auswurfspindel 8. Dabei wird die in der Auswurfspindel geführte Spindelstange 2 durch den Gasdruck in Richtung auf den Bajonettverschluss 1 des abwerfbaren Flugdatenschreibers verschoben und öffnet dadurch den Bajonettverschluss 1. Als Folge wird der abwerfbare Flugdatenschreiber von der Auswurfvorrichtung getrennt und kann sich vom Flugzeug entfernen.

### Auslösung der Ausrückvorrichtung bei nicht montiertem abwerfbaren Flugdatenschreiber (Fig. 4)

Diese Situation stellt einen Fehlerfall dar, verursacht durch:
- Unsachgemäßen Gebrauch, wenn die Ausrückvorrichtung 3 in den elektrischen Betrieb genommen wird, z.B. eine Zündvorrichtung an der Ausrückvorrichtung 3 angeschlossen und betätigt wird, obwohl keine Auswurfspindel montiert ist.
- Wenn eine intakte Ausrückvorrichtung für längere Zeit einem Feuer ausgesetzt ist.

Fig. 4 zeigt eine Ausrückvorrichtung 3 mit nicht montierter Auswurfspindel. In einer solchen Situation verhält sich die Ausrückvorrichtung 3 wie folgt:
Unter der Beaufschlagung der Feder 5 wird das Ventil 6 nun auf den Gewindeeinsatz 7 gedrückt. Bei einer elektrischen Zündung des Gasdruckgenerators 4 oder einer hohen thermischen Einwirkung auf den Gasdruckgenerator 4 wird der vom Gasdruckgenerator erzeugte Gasdruck über das Ventil 6 in den Innenraum der Ausrückvorrichtung 3 entlassen. Ein direkter, schneller Gasaustritt aus der Ausrückvorrichtung wird durch das Ventil 6 verhindert, das nun auf dem Gewindeeinsatz 7 sitzt.

Über gewollte, minimale Undichtigkeiten zwischen Ventil 6 und Gewindeeinsatz 7 wird das Druckgas sehr langsam und auf die Gehäusetemperatur abgekühlt entlassen. Da das Ventil 6 (vorgespannt durch die Feder 5) in der Position verbleibt, hat die Auslösung des Gasdruckgenerators keine mechanische Wirkung an der Außenseite der Ausrückvorrichtung.

## Patentansprüche

1. Abwerfvorrichtung für einen Flugdatenschreiber, mit
- einer Auswurfspindel (8), die über einen Bajonettverschluss (1) mit dem Flugdatenschreiber wiederlösbar verbunden werden kann, wobei der Bajonettverschluss (1) durch eine Beaufschlagung mit der Auswurfspindel (8) gelöst werden kann,
- einer Ausrückvorrichtung (3) mit einem druckfesten Gehäuse, in welche die Auswurfspindel (8) eingeschraubt werden kann, sowie einem Gasdruckgenerator (4),
- einem innerhalb der Ausrückvorrichtung (3) befindlichen Ventil (6), das bei eingeschraubter Auswurfspindel (8) eine Fließverbindung zwischen dem Ausgang des Gasdruckgenerators (4) und der Auswurfspindel (8) zulässt, und bei abgeschraubter Auswurfspindel (8) die Fließverbindung zwischen dem Ausgang des Gasdruckgenerators (4) und der Auswurfspindel (8) unterbindet.

2. Abwerfvorrichtung nach Anspruch 1, **dadurch gekennzeichnet, dass** durch Einschrauben der Auswurfspindel (8) in die Ausrückvorrichtung (3) das Ventil (6) vorgespannt wird.

3. Abwerfvorrichtung nach einem der vorangehenden Ansprüche, **dadurch gekennzeichnet, dass** die Auswurfspindel (8) eine durch Gasdruck bewegliche Spindelstange (2) zur Beaufschlagung des Bajonettverschlusses umfasst.

## Claims

1. Ejection device for a flight data recorder, with
- an ejection spindle (8) which can be connected rereleasably to the flight data recorder via a bayonet fastening (1), the bayonet fastening (1) being releasable by being acted upon by the ejection spindle (8),
- a disengagement device (3) with a pressure-resistant housing, into which disengagement device the ejection spindle (8) can be screwed, and a gas pressure generator (4),
- a valve (6) which is located inside the disengagement device (3) and which, when the ejection spindle (8) is screwed in, permits a flow connection between the outlet of the gas pressure generator (4) and the ejection spindle (8) and, when the ejection spindle (8) is unscrewed, prevents the flow connection between the outlet of the gas pressure generator (4) and the ejection spindle (8).

2. Ejection device according to Claim 1, **characterized in that** the valve (6) is prestressed by the ejection spindle (8) being screwed into the disengagement device (3).

3. Ejection device according to one of the preceding claims, **characterized in that** the ejection spindle (8) comprises a spindle rod (2), movable by gas pressure, for acting upon the bayonet fastening.

## Revendications

1. Dispositif d'éjection pour un enregistreur de vol, comprenant :
- une broche d'éjection (8) qui peut être connectée de manière amovible par le biais d'une fermeture à baïonnette (1) à l'enregistreur de vol, la fermeture à baïonnette (1) pouvant être desserrée par une sollicitation avec la broche d'éjection (8),
- un dispositif de débrayage (3) avec un boîtier résistant à la pression, dans lequel dispositif de débrayage peut être vissée la broche d'éjection (8), ainsi qu'un générateur de pression de gaz (4),
- une soupape (6) située à l'intérieur du dispositif de débrayage (3), laquelle, lorsque la broche d'éjection (8) est vissée, permet une connexion fluidique entre la sortie du générateur de pression de gaz (4) et la broche d'éjection (8), et lorsque la broche d'éjection (8) est dévissée, supprime la connexion fluidique entre la sortie du générateur de pression de gaz (4) et la broche d'éjection (8).

2. Dispositif d'éjection selon la revendication 1, **caractérisé en ce que**, par vissage de la broche d'éjection (8) dans le dispositif de débrayage (3), la soupape (6) est précontrainte.

3. Dispositif d'éjection selon l'une quelconque des revendications précédentes, **caractérisé en ce que** la broche d'éjection (8) comprend une tige de broche (2) déplaçable par une pression de gaz, pour solliciter la fermeture à baïonnette.
